# EUROPÄISCHE PATENTANMELDUNG

(11) **EP 3 235 371 A1**
(43) Veröffentlichungstag der Anmeldung: **25.10.2017**
(21) Anmeldenummer: 17166737.1
(22) Anmeldetag: 18.04.2017
(51) Int. Cl.: A01G 23/099, B66D 1/04, B66D 1/28

(54) **VORRICHTUNG ZUM SICHERN VON PFLANZENTEILEN BEIM BAUM-SCHNITT/FÄLLEN VON PFLANZEN**

(30) Priorität: 21.04.2016 IT UA20162777
(71) Anmelder: Arboteam srl, 39100 Bolzano (IT)
(72) Erfinder: Trentini, Andrea, 39100 Bolzano (IT)
(74) Vertreter: Ausserer, Anton

(57) **Zusammenfassung**

Beschrieben wird eine Vorrichtung (1) zum Sichern von Pflanzenteilen beim Baumschnitt/Fällen von Pflanzen, umfassend eine Platte (2) zur Befestigung auf einer Baumstammoberfläche oder ähnlichen durch Befestigungsmittel (30, 31, 20), wobei auf der Fläche, die jener abgewandt ist, auf der Stammoberfläche zum Liegen kommt, ein erster Zylinder (3) angeordnet ist, der an einem Ende an der Platte (2) befestigt ist und mindestens eine Öffnung in der Zylinderwand und einen erhöhten Rand (3a) am der Platte abgewandten Ende aufweist, und wobei innerhalb des Zylinders eine Antriebswinde (4) angeordnet ist, die mittels einer Kurbel antreibbar ist.

Gemäß der Erfindung ist an einem Rand der Platte mindestens eine Klemmeinrichtung (10) zur Arretierung eines durchgehenden Seils/Schnur (14) angeordnet, und wobei zwischen der Klemmeinrichtung (10) und der Platte (2) mindestens ein Führungselement (13) angeordnet ist, das das Seil/Schnur (14) mit einem gegenüber der Plattenebene (2) vorgegebenen Winkel in Richtung des Zylinders (3) und/oder der Antriebswinde (4) leitet und auf der Platte (2) mindestens ein Haken (15) für die Befestigung/das Aufwickeln des Seils/der Schnur(14) angeordnet ist, und welches mindestens einen Abstandshalter (22) aufweist, um die Berührung zwischen einem ersten und einem zweiten Seil zu vermeiden.

## Beschreibung

Die Erfindung betrifft eine Vorrichtung zum Sichern von Pflanzenteilen beim Baumschnitt/Fällen von Pflanzen.

Beim Baumschnitt/Fällen von Pflanzen ist die Verwendung von Seilen, Schnüren und ähnliche gefragt. Diese Seile werden dazu verwendet, um die abzuschneidenden Pflanzenteile festzumachen um sie mit Sicherheit führen/lenken und herablassen zu können.

Aus dem Stand der Technik sind zahlreiche Vorrichtungen dieser Art bekannt.

Die US 5,484,253 beschreibt eine Vorrichtung zur Anbringung an einem Baumstamm um in der Baumwirtschaft bei der Handhabung von Lasten verwendet zu werden. Die Vorrichtung wird an einer gekrümmten Fläche des Stammes angesetzt. Bevorzugter Weise wird die Vorrichtung mittels von spitzen Elementen am Stamm befestigt. In einer weiteren Ausführungsform ist ein Band vorgesehen, dass den Stamm umgreift und die Vorrichtung am Stamm festspannt.

Eine weitere Vorrichtung bekannter Art wird in der US 2004/0178397 beschrieben. Die in dieser Veröffentlichung beschriebene Vorrichtung umfasst eine Kurbel, um das Teil des Baums hoch zu heben. In der Baumwirtschaft wird oftmals sowohl das Anheben als auch das Herablassen von Pflanzenteilen benötigt.

Aus der Kurzfilmaufnahme Winch & GRCs ist eine Vorrichtung bekannt, die einen Hohlzylinder mit Öffnung umfasst, im dessen Inneren eine Winde angeordnet ist, um das Anheben und das Herablassen eines Pflanzenteils zur erleichtern.

Diese Anordnung erlaubt keinen Betrieb mit mehreren Seilen, da sich ein Reibungsproblem zwischen den Seilen stellen könnte. Überdies ist es nicht möglich, die Seile der Art zeitweise zu befestigen, dass vom Betrieb eines Seils auf den anderen Betrieb übergegangen werden könnte, insbesondere um vom Anheben mit der Winde auf das Herablassen mit dem Zylinder überzugehen.

Aus der Filmaufnahme Arbpro LD1 ist eine Vorrichtung bekannt, um das Anheben und das Herablassen eines Baumteiles zu erleichtern. Diese Vorrichtung umfasst eine Einrichtung zur Arretierung eines Seils.

Um vom Schritt des Herablassens auf den Schritt des Anhebens überzugehen ist der Austausch von beweglichen Teilen vorgesehen.

Diese Vorrichtungen erlauben nicht auf einfacher und rascher Weise den Betrieb von zwei Seilen. Insbesondere wird eine Berührung zwischen den Seilen nicht vermieden, was gravierende Schäden hervorrufen könnte.

Die Aufgabe der vorliegenden Erfindung ist die Herstellung einer Vorrichtung, die das Anheben und Herablassen von Baumteilen unter Sichern auch mittels mehreren als einem Seil auf einer Vorrichtung erlaubt, wobei die Reibung zwischen den einzelnen Teilen vermieden wird.

Diese Aufgabe wird durch eine erfindungsgemäße Vorrichtung gelöst.

Die erfindungsgemäße Vorrichtung umfasst eine Platte zur Befestigung durch Befestigungsmittel auf einer Baumstammoberfläche oder ähnlichen, wobei auf der Fläche, die jener abgewandt ist, auf der Stammoberfläche zum Liegen kommt, ein erster Zylinder angeordnet ist, der an einem Ende an der Platte befestigt ist und mindestens eine Öffnung in der Zylinderwand und einen erhöhten Rand am der Platte abgewandten Ende aufweist, und wobei innerhalb des Zylinders eine Antriebswinde angeordnet ist, die mittels einer Kurbel antreibbar ist, wobei an einem Rand der Platte mindestens eine Klemmeinrichtung zur Arretierung eines durchgehenden Seils angeordnet ist, und wobei zwischen der Klemmeinrichtung und der Platte mindestens ein Führungselement angeordnet ist, das das Seil mit einem vorgegebenen Winkel in Richtung des Zylinders und/oder der Antriebswinde leitet, und auf der Platte mindestens ein Haken für die Befestigung/das Aufwickeln des Seils angeordnet ist, und welches einen Abstandshalter aufweist, um die Berührung zwischen einem ersten und einem zweiten Seil zu vermeiden.

Die erfindungsgemäße Vorrichtung umfasst daher eine Platte. Diese kann vorteilhafterweise mittels eines Bandes befestigt werden, das den Baumstamm oder ähnliches umgreift und mittels einer Winde gespannt wird. Vorteilhafterweise wird dann ein Einschnitt im Baumstamm durchgeführt, um die Vorrichtung besser zu befestigen. Vorteilhafterweise weist die Platte auf der Seite des Baumstammes Dorne oder Druckstäbe aus Metall auf, die am Stamm angreifen. Nach der Befestigung macht der Benutzer das Seil oder die Schnur beispielsweise um den Baumstamm herum fest, den er abschneiden möchte. Dieses Seil wird auf einer Seilrolle gebracht, die zum Beispiel am Baum befestigt ist. Die Schnur/das Seil wird dann durch die Klemmeinrichtung geführt. Vor der Durchführung durch die Klemmeinrichtung kann ein Führungselement anwesend sein, um das Seil auszurichten. Nach der Klemmeinrichtung wird das Seil/die Schnur durch das Führungselement hindurchgeführt. Dieses Führungselement richtet das Seil entweder auf den Außenzylinder oder auf die innerhalb des Zylinders angeordnete Seilrolle über die Öffnung des Zylinders. Die Wahl wird in Abhängigkeit der Verwendung getroffen. Will man zum Beispiel einen Baumzweig Herablassen, so wird die Schnur/das Seil auf dem Zylinder aufgewickelt und darauf folgend wird der Baumzweig langsam in Richtung der Erde herabgelassen. Wird das Anheben des Bauzweiges verlangt, so wird die Schnur/das Seil an der Seilrolle befestigt und danach wird die Schnur/das Seil unter Betätigung einer Kurbel aufgewickelt. Auf diese Art und Weise wird der Baumzweig angehoben.

Es kann verlangt werden, dass eine der beiden Vorgänge unterbrochen wird oder dass man von einem ersten Schritt des Anhebens auf einen zweiten Schritt des Herablassens des Baumzweigs übergeht. In diesem Fall wird das Seil mittels der Klemmeinrichtung arretiert und, falls erforderlich, wird das Seil zum Beispiel durch die innere Seilwinde auf den Außenzylinder gebracht.

Auf der Platte können weitere Haken zur Befestigung des Seils/der Schnur vorgesehen sein.

Um die Berührung zwischen zwei gleichzeitig verwendeten Seilen/Schnüren zu vermeiden, ist auf der Oberfläche des Zylinders ein Abstandshalter vorgesehen.

Vorteilhafterweise richtet das zwischen der Klemmeinrichtung und der Platte gelegene Führungselement das Seil/die Schnur mit einem Winkel zwischen 6-10° gegenüber der Platte in Richtung des Zylinders und/oder der inneren Seilwinde aus. Auf diese Art und Weise wird die kleinste Berührung des Seils/der Schnur sichergestellt, während sie/es auf den Zylinder übergeht oder auf die Seilwinde aufgewickelt wird.

Vorteilhafterweise ist der Zylinder in Aluminium gefertigt. Auf diese Art und Weise wird eine optimale Wärmedissipation sichergestellt, die sich während des Schrittes des Herablassens des Baumzweiges entwickelt.

Vorteilhafterweise ist der Zylinder mittels Schrauben an der Platte befestigt. Auf diese Weise wird einen Verschweißen zwischen der, bevorzugter Weise, aus Stahl gefertigten Platte und dem bevorzugter Weise aus Aluminium gefertigten Zylinder vermieden.

Auf der erfindungsgemäßen Vorrichtung können auch zwei oder mehrere Seile rechtzeitig betrieben werden. In diesem Fall ist mindestens eine zweite mit der Platte verbundene Klemmeinrichtung vorhanden und zwischen der Platte und der zweiten Klemmeinrichtung ist ein weiteres Führungselement angeordnet. In diesem Fall leitet zum Beispiel die erste Klemmeinrichtung das erste Seil/die erste Schnur auf den Außenzylinder und die zweite Klemmeinrichtung führt das Seil/die Schnur auf die innere Seilwinde. In diesem Fall kann ein Abstandhalter vorgesehen sein, der die Berührung zwischen den beiden Seilen vermeidet. Dieser Abstandhalter kann abschraubbar sein. Dieser Kontakt zwischen den Seilen könnte besonders gefährlich sein, da er die Abnutzung der Seile bewirkt und Wärme entwickelt. Beide Faktoren können eine Herabsetzung der mechanischen Festigkeit des Seils/der Schnur betragen.

Nachfolgend wird nicht begrenzend eine erfindungsgemäße Vorrichtung unter Bezugnahme auf die Zeichnungen beschrieben:

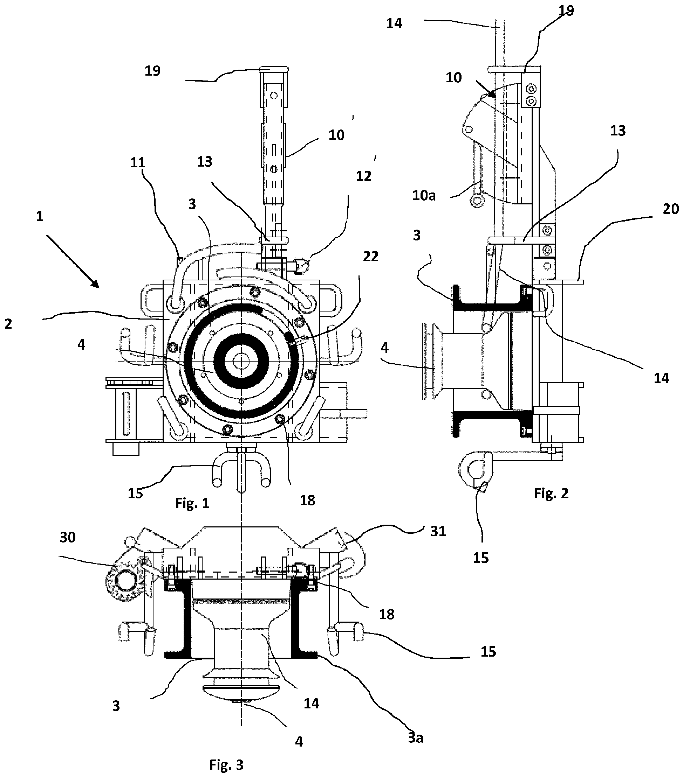

- Figur 1: zeigt eine Stirnansicht einer erfindungsgemäßen Vorrichtung.
- Figur 2: zeigt einen seitlichen Schnitt der erfindungsgemäßen Vorrichtung.
- Figur 3: zeigt einen Schnitt einer Draufsicht der erfindungsgemäßen Vorrichtung.

Die erfindungsgemäße Vorrichtung ist insgesamt mit der Bezugsziffer 1 angegeben. Die erfindungsgemäße Vorrichtung 1 kann an einem nicht gezeigten Baumstamm oder ähnlichem befestigt werden, um den Vorgang des Anhebens oder Herablassens von Baumstücken zum Beispiel Ästen zu erleichtern. Dabei wird die erfindungsgemäße Vorrichtung 1 an einem Baumstamm oder ähnlichen festgemacht. Die Vorrichtung 1 umfasst eine Platte 2, die am Baumstamm oder ähnlichem befestigt wird. Diese Befestigung kann zum Beispiel mittels eines Bandes erfolgen, das den Baumstamm umgibt und auf einer Seite der Platte zum Beispiel mittels eines Hakens 31 befestigt wird und auf der anderen Seite der Platte mittels eines Aufwickelelementes 30 gespannt wird. Um die Verspannung auf dem Aufwickelelement zu erleichtern kann die Verwendung einer Kurbel vorgesehen sein.

Alternativ oder zusätzlich können auf der Platte 2 an der zur Oberfläche des Baumstamms gerichteten Seite spitze Elemente zum Beispiel Dorne oder Durchstäbe 20 befestigt sein. Diese spitzen Elemente 20 können in, zum Beispiel, durch einen Einschnitt mit einer Motorsäge dazu vorbereiteten Schlitzen eingebracht werden

Kann nicht eingeschnitten werden oder können die Druckstäbe 20 nicht in den Baumstamm eingetrieben werden, können diese zum Beispiel mit Plastikelementen abgedeckt werden. Auf diese Weise wird der Baum nicht beschädigt.

Auf der der Oberfläche des Baumstammes abgewandten Vorderseite der Platte 2 ist ein Zylinder 3 angeordnet. Dieser Zylinder 3 ist vorteilhafterweise in Aluminium gefertigt. Ein Ende des Zylinders 3 ist an der Platte 2 bevorzugter Weise mittels einer Reihe von Schrauben 18 an der Basis des Zylinders 3 befestigt.

Das der Platte 2 abgewandten Ende des Zylinders weist eine Erhöhung 3a auf. Die Zylinderwand des Zylinders weist mindestens eine Öffnung bevorzugter Weise längs der gesamten Länge der Zylinderwand auf.

Innerhalb des Zylinders 3 ist eine Antriebsseilrolle 4 angeordnet. Diese Antriebsseilrolle 4 ist mittels einer Kurbel antreibbar. Die nicht dargestellte Kurbel kann sowohl für die Antriebsseilrolle 4 jedoch auch für die Verspannung eines Bandes mit der Vorrichtung 30 verwendet werden.

Mit der Platten2 ist überdies eine Klemmeinrichtung 10 verbunden. Diese Klemmeinrichtung 10 kann lösbar mit einem Langloch 11 der Platte2 beispielsweise mittels eines Bolzens 12 befestigt sein. Dieser erlaubt die Verschiebung der Klemmeinrichtung 10 von einer Seite der Platte auf die andere oder mehrere Klemmeinrichtungen 10 an der Platte 2 zu befestigen. Zwischen der Klemmeinrichtung 10 und dem Zylinder 3 oder der Antriebswinde 4 ist ein Führungselement 13 zwischengeschaltet.

Ein Seil/eine Schnur 14 ist mit einem nicht gezeigten Teil eines zu transportierenden Baums verbunden, das zum Beispiel auf eine am Baum durch die Klemmeinrichtung 10 befestigte Seilrolle oder ähnlichen übergeht. Vor der Klemmeinrichtung kann ein Führungselement 19 angeordnet sein, um das Seil/die Schnur 14 in Richtung der Klemmeinrichtung 10 zu richten. Das Seil 14 wird durch das Führungselement 13 geführt. Dieses Führungselement 13 richtet das Seil je nach Verwendung in Richtung der Antriebswinde 4 oder in Richtung des Zylinders 3. In diesem Fall wird für das Herablassen das Baumteil in Richtung des Zylinders 3 geführt. Das Seil 14 wird einmal oder mehrere Male um den Zylinder 3 herum gewickelt. Das Seil 14 bildet einen Winkel zwischen 6° - 10° gegenüber der Plattenebene, bevorzugter Weise 8°. Auf diese Weise wird das optimale Aufwickeln auf dem Zylinder 3 oder auf der Seilrolle 4 gewährleistet.

Danach wird das Ende vom Benutzer ergriffen, der das Seil langsam um den Zylinder gleiten lässt, um das überwachte Herablassen des Baumteils zu gewährleisten. Der überhöhte Rand 3a erlaubt eine größere Sicherheit um zu vermeiden, dass sich das Seil vom Zylinder 3 abhebt.

Um über eine weitere Befestigungsstelle zu verfügen, kann das Seil/die Schnur 14 befestigt werden, während man zum Beispiel möchte, den Baumzweig in Richtung des Antriebs 4 geführt anheben. Das Seil 14 wird durch die Öffnung in der Zylinderwand 3 hindurchgeführt.

Nachfolgend wird das Seil auf der Antriebsseilwinde 4 befestigt. Mit, zum Beispiel, einer Kurbel wird das Seil 14 auf der Antriebsseilwinde 4 aufgewickelt.

Möchte man nun vom Anheben auf das Herablassen des Baumzweiges übergehen, wird das Seil/die Schnur 14 mittels der Klemmeinrichtung 10 arretiert, indem eine Hebel 10a geschlossen wird. Nach der Arretierung wird das Seil von der Seilrolle 4a abgenommen und wickelt es auf dem Zylinder 3, um den Baumzweig herabzulassen.

In einer bevorzugten Ausführungsform können zwei Klemmeneinrichtungen 10 vorgesehen sein. In diesem Fall kann ein Seil 14 für das Anheben und ein anderes Seilen zum Beispiel für das Herablassen verwendet werden oder um einen Zweigabschnitt in Position zu halten.

Um den Kontakt zwischen zwei Seilen/Schnüren zu vermeiden ist ein Abstandshalter 22 auf der Außenfläche des Zylinders 3 vorhanden. Dieser Abstandhalter 22 kann zum Beispiel ein Bolzen oder einer Reihe von Bolzen oder ähnlichen oder eine Struktur längs des gesamten Umfanges der Außenfläche des Zylinders 3 sein.

Schließlich es klar, dass an der bis jetzt beschriebenen Vorrichtung für einen Fachmann naheliegende Zusätze, Änderungen oder Varianten vorgenommen werden können, ohne den durch die beigefügten Patentansprüche festgelegten Schutzbereich der vorliegenden Erfindung zu verlassen.

## Patentansprüche

1. Vorrichtung (1) zum Sichern von Pflanzenteilen beim Baumschnitt/Fällen von Pflanzen, umfassend eine Platte (2) zur Befestigung auf einer Baumstammoberfläche oder ähnlichen durch Befestigungsmittel (30, 31, 20), wobei auf der Fläche, die jener abgewandt ist, auf der Stammoberfläche zum Liegen kommt, ein erster Zylinder (3) angeordnet ist, der an einem Ende an der Platte (2) befestigt ist und mindestens eine Öffnung in der Zylinderwand und einen erhöhten Rand (3a) am der Platte abgewandten Ende aufweist, und wobei innerhalb des Zylinders eine Antriebswinde (4) angeordnet ist, die mittels einer Kurbel antreibbar ist, **dadurch gekennzeichnet, dass** an einem Rand der Platte mindestens eine Klemmeinrichtung (10) zur Arretierung eines durchgehenden Seils/Schnur (14) angeordnet ist, und wobei zwischen der Klemmeinrichtung (10) und der Platte (2) mindestens ein Führungselement (13) angeordnet ist, das das Seil/Schnur (14) mit einem gegenüber der Plattenebene (2) vorgegebenen Winkel in Richtung des Zylinders (3) und/oder der Antriebswinde (4) leitet und auf der Platte (2) mindestens ein Haken (15) für die Befestigung/das Aufwickeln des Seils/der Schnur(14) angeordnet ist, und welches mindestens einen Abstandshalter (22) aufweist, um die Berührung zwischen einem ersten und einem zweiten Seil zu vermeiden.

2. Vorrichtung nach Anspruch 1, **dadurch gekennzeichnet, dass** der Zylinder (3) in Aluminium gefertigt ist.

3. Vorrichtung nach den vorstehenden Ansprüchen, **dadurch gekennzeichnet, dass** der vorgegebene Winkel zwischen 6-10°, bevorzugter Weise 8° beträgt.

4. Vorrichtung nach den vorstehenden Ansprüchen, **dadurch gekennzeichnet, dass** die Vorrichtung mindestens zwei Klemmeinrichtungen (10) umfasst.

5. Vorrichtung nach den vorstehenden Ansprüchen, **dadurch gekennzeichnet, dass** der Zylinder (3) mittels Schrauben (18) an der Platte (2) befestigt ist.

6. Vorrichtung nach den vorstehenden Ansprüchen, **dadurch gekennzeichnet, dass** der Abstandhalter (22) abschraubbar ist.

7. Vorrichtung nach den vorstehenden Ansprüchen, **dadurch gekennzeichnet, dass** mindestens ein zweites Führungselement (19) vor der Klemmeinrichtung vorgesehen ist.
